# EUROPEAN PATENT APPLICATION

(11) **EP 4 773 420 A1**
(43) Date of publication of application: **08.07.2026**
(21) Application number: 25849548.0
(22) Date of filing: 19.02.2025
(51) Int. Cl.: H01M 50/553, H01M 50/543, H01M 50/528

(54) **TERMINAL, COVER PLATE ASSEMBLY AND BATTERY CELL**

(30) Priority: 12.10.2024 CN 202422474708 U; 12.11.2024 CN 202411614729; 12.11.2024 CN 202422764279 U
(71) Applicant: Eve Power Co., Ltd., Jingmen, Hubei 448000 (CN)
(72) Inventor: TAN, Mingsheng, Jingmen, Hubei 44800 (CN); ZHAO, Hongwan, Jingmen, Hubei 44800 (CN); GUI, Ke, Jingmen, Hubei 44800 (CN); YUAN, Dingding, Jingmen, Hubei 44800 (CN); CHEN, Xue, Jingmen, Hubei 44800 (CN); HE, Wei, Jingmen, Hubei 44800 (CN); LV, Zhengzhong, Jingmen, Hubei 44800 (CN)
(74) Representative: Studio Torta S.p.A.
(86) International application number: PCT/CN2025/078008
(87) International publication number: WO 2026/076861

(57) **Abstract**

A pole, a cover assembly, and a cell are provided, which relates to the field of cell technologies. The pole includes a body having a first surface, and the first surface defines a tab welding groove; The tab welding groove includes at least one groove sidewall, the groove sidewall is configured to be in contact with the tab of the cell, and a plane where the groove sidewall is located is gradually inclined toward an axis of the pole in a direction away from the first surface.

## Description

This application claims priority to Chinese Patent Application No. 202422474708.2 filed on October 12, 2024, Chinese Patent Application No. 202411614729.8 filed on November 12, 2024, and Chinese Patent Application No. 202422764279.2 filed on November 12, 2024, and the entire contents of the foregoing applications are incorporated herein by reference.

### TECHNICAL FIELD

The present disclosure relates to the field of cell technologies, and in particular, to a pole, a cover assembly, and a cell.

### BACKGROUND

A cell includes a housing, an electrode assembly disposed in the housing, and a pole disposed on the housing. In the related art, in order to improve the energy density of the cell, the electrode assembly is directly connected to the pole through a tab. The connection method between the pole and the tab has an important impact on the performance of the cell.

### SUMMARY

In the related art, a solution in which a tab and a pole are connected to each other has some disadvantages, resulting in poor performance of a cell.

According to a first aspect, the present disclosure provides a pole, where the pole includes a body, the body includes a first surface, and the first surface defines a tab welding groove. The tab welding groove includes at least one groove sidewall, the groove sidewall is configured to be in contact with the tab of the cell, and a plane where the groove sidewall is located is gradually inclined toward an axis of the pole in a direction away from the first surface.

According to a second aspect, the present disclosure provides a cover assembly, where the cover assembly includes a cover plate and the foregoing pole, and the pole passes through the cover plate.

According to a third aspect, the present disclosure provides a cell, where the cell includes a housing, an electrode assembly, at least one tab, and the foregoing cover assembly. The housing defines an accommodation cavity, and an end of the housing is an open end. The electrode assembly is disposed in the accommodation cavity. An end of the tab is connected to the electrode assembly. The cover assembly covers the open end of the housing to enclose the accommodation cavity. Another end of the tab extends into the tab welding groove, and the tab is attached to the groove sidewall and is connected and fixed to an inner wall of the tab welding groove.

### BENEFICIAL EFFECTS

In the invention, by limiting the groove sidewall in contact with the tab to be inclined toward the axis of the pole, the bending angle of the tab in contact with the groove sidewall can be reduced, so as to avoid obvious stress concentration of the tab at the bending position, thereby effectively avoiding cracks or even fractures of the tab at the bending position. In this way, the structural integrity of the tab can be ensured, the current-carrying capacity of the tab can be improved, and the current transfer capability between the tab and the pole can be improved, thereby improving the performance of the cell.

### BRIEF DESCRIPTION OF THE DRAWINGS

FIG. 1 is a first schematic view of a structure of a pole according to some embodiments of the present disclosure.
FIG. 2 is a schematic view of a cross section of a pole perpendicular to an extension direction of a tab welding groove according to some embodiments of the present disclosure.
FIG. 3 is a schematic view of cooperation between a pole and a tab according to some embodiments of the present disclosure.
FIG. 4 is an enlarged view of position A in FIG. 3.
FIG. 5 is a second schematic view of a structure of a pole according to some embodiments of the present disclosure.
FIG. 6 is a third schematic view of a structure of a pole according to some embodiments of the present disclosure.
FIG. 7 is a fourth schematic view of a structure of a pole according to some embodiments of the present disclosure.
FIG. 8 is a side view of the pole shown in FIG. 7 according to some embodiments of the present disclosure.
FIG. 9 is a schematic view of cooperation between a pole and a tab shown in FIG. 7 according to some embodiments of the present disclosure.
FIG. 10 is a schematic view of a structure of a cover assembly according to some embodiments of the present disclosure.
FIG. 11 is a schematic view of a structure of a cell according to some embodiments of the present disclosure.
FIG. 12 is a schematic view of cooperation between a pole and a tab in another cross-sectional direction according to some embodiments of the present disclosure.
FIG. 13 is a front view of a cell according to some embodiments of the present disclosure.
FIG. 14 is a top view of a cell according to some embodiments of the present disclosure.
FIG. 15 is a cross-sectional view of a cover assembly according to some embodiments of the present disclosure.
FIG. 16 is a first schematic view of connection between a pole and an electrode assembly according to some embodiments of the present disclosure.
FIG. 17 is a second schematic view of connection between a pole and an electrode assembly according to some embodiments of the present disclosure.
FIG. 18 is a third schematic view of connection between a pole and an electrode assembly according to some embodiments of the present disclosure.
FIG. 19 is a first cross-sectional view of a pole according to some embodiments of the present disclosure.
FIG. 20 is a second cross-sectional view of a pole according to some embodiments of the present disclosure.
FIG. 21 is a third cross-sectional view of a pole according to some embodiments of the present disclosure.
FIG. 22 is a fourth cross-sectional view of a pole according to some embodiments of the present disclosure.

Explanation of reference numerals:
5, pole; 51, body; 52, first surface; 53, tab welding groove; 531, groove sidewall; 532, groove bottom wall; 54, extension portion; 55, axis of the pole;
2, cover assembly; 21, cover plate;
3, cell; 31, housing; 32, electrode assembly; 321, end face of the electrode assembly facing the pole; 33, tab;
11, open end; 2213, third welding surface; 23, liquid injection hole; 24, insulating member; 25, sealing member; 26, platen; 4, protective layer.

### DETAILED DESCRIPTION

For ease of understanding the solutions of the present disclosure, before the pole, the cover assembly, and the cell provided in the present disclosure are described, the related art of the present disclosure is first described.

In the related art, a cell includes a housing, an electrode assembly disposed in the housing, and a pole disposed on the housing. In order to improve the energy density of the cell, the electrode assembly is directly connected to the pole through the tab. Although this connection method can improve the energy density of the cell, the tab needs to be bent at least once, and the bending angle is large. Since the tab is foil, it is easy to break when bent. In this way, the current transfer between the tab and the pole is adversely affected, thereby affecting the performance of the cell.

Based on this, embodiments of the present disclosure provide a pole, a cover assembly, and a cell, to solve a problem of tab bending, thereby improving the current transfer capability between the tab and the pole, and improving performance of the cell.

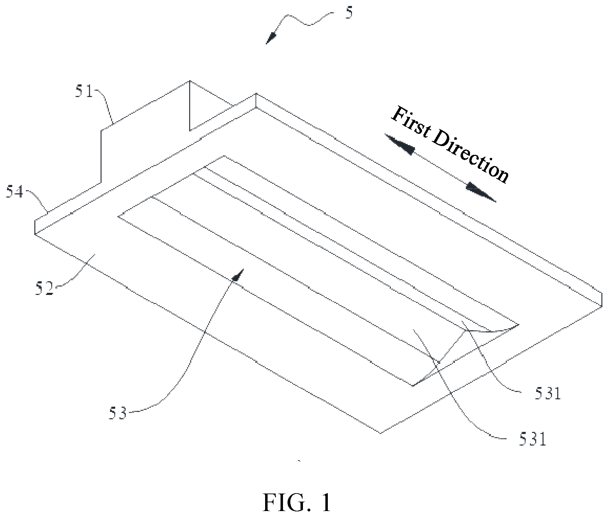

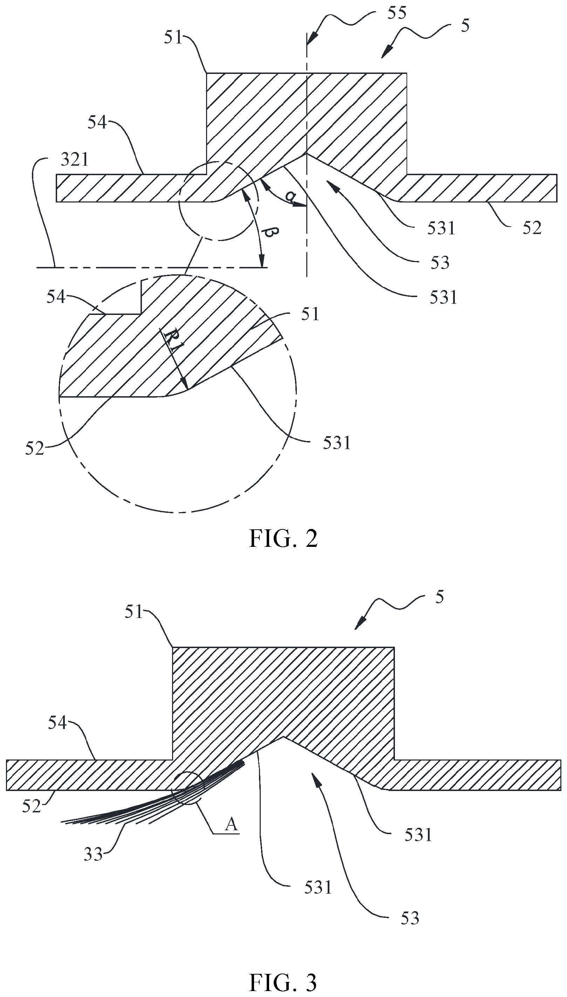

Referring to FIG. 1 and FIG. 2, FIG. 1 is a first schematic view of a structure of a pole 5 according to some embodiments of the present disclosure, FIG. 2 is a schematic view of a cross section of an pole 5 perpendicular to an extension direction of a tab welding groove 53 according to some embodiments of the present disclosure, and the embodiments of the present disclosure provide a pole 5, applied to a cell 3. The pole 5 includes a body 51. The body 51 has a first surface 52. The first surface 52 is provided with a tab welding groove 53. The tab welding groove 53 has a groove sidewall 531. The groove sidewall 531 is configured to be in contact with the tab 33 of the cell 3. In the direction away from the first surface 52, the plane where the groove sidewall 531 is located is gradually inclined toward the axis of the pole 5.

A portion of the tab 33 located in the tab welding groove 53 is parallel to the groove sidewall 531. The tab 33 has a length dimension, a width dimension, and a thickness dimension. The width dimension is an extension direction of a part where the tab 33 is connected to the current collector of the electrode sheet. Specifically, the direction of the width dimension of the tab 33 is parallel to the first surface and the groove sidewall 531.

It can be understood that the first surface 52 faces the electrode assembly of the cell 3.

It can be understood that there is an included angle α between the plane where the groove sidewall 531 is located and the axis of the pole 5. The included angle α is an acute angle and is located on a side of the first surface 52 away from the electrode assembly. It can be understood that the plane where the groove sidewall 531 is located forms an acute angle α with the axis of the pole 5. Correspondingly, the groove sidewall 531 forms an acute angle β with the end face 321 of the electrode assembly of the cell 3 facing the pole. The included angle β is complementary to the included angle α.

It can be understood that the angle α satisfies: 0< α < 90°. Specifically, the included angle α includes, but is not limited to, 10°, 20°, 30°, 35°, 40°, 45°, 50°, 56°, 60°, 65°, 70°, 75°, 80°, and 85°.

It can be understood that the tab welding groove 53 may be a groove structure, a through groove structure, or a semi-open groove structure in which only an end is in communication with the outside and the other end is enclosed.

In addition, the tab welding groove 53 may be a V-shaped groove, a trapezoidal groove, or a groove of another shape. A shape of the bottom wall of the tab welding groove 53 is not limited, and may be a planar bottom wall, an arc groove bottom, or a groove bottom of another special-shaped structure.

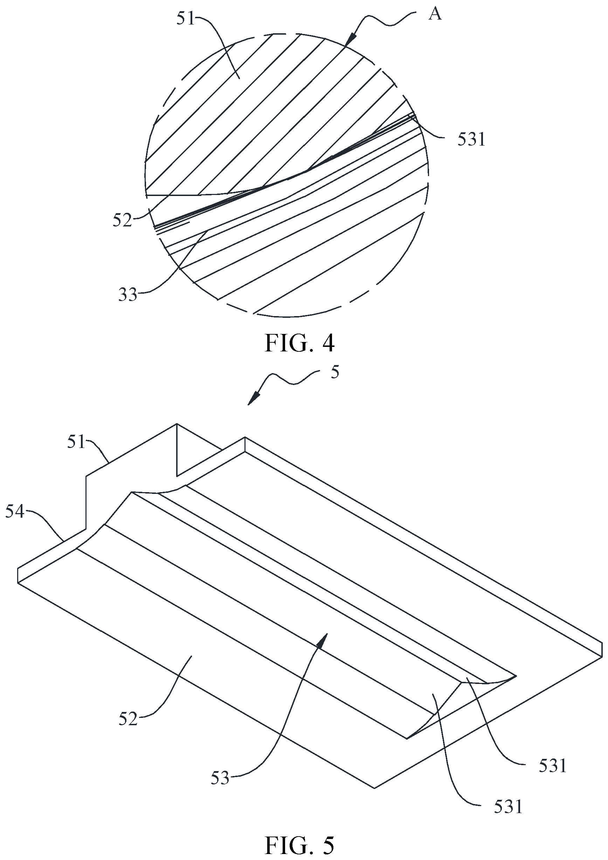

As shown in FIG. 3, FIG. 3 is a schematic view of cooperation between a pole 5 and a tab 33 according to some embodiments of the present disclosure, when the pole 5 is connected to the tab 33, a plurality of layers of tabs 33 are stacked to form a tab cluster, and the tab cluster extends along the groove sidewall 531 and is inserted into the tab welding groove 53. As shown in FIG. 4, FIG. 4 is an enlarged view of position A in FIG. 3. In the tab cluster, the tab 33 close to the groove sidewall 531 has a bend, and the bend is small. In addition, the bending angle of the tabs 33 in the tab cluster becomes smaller as they move away from the groove sidewall 531. That is, flatness of the tab 33 farther away from the groove sidewall 531 is better.

In these embodiments, by limiting the groove sidewall 531 in contact with the tab 33 to be inclined toward the axis of the pole 5, the bending angle of the tab 33 in contact with the groove sidewall 531 can be reduced, so as to avoid obvious stress concentration of the tab 33 at the bending position, thereby effectively avoiding cracks or even fractures of the tab 33 at the bending position. In this way, the structural integrity of the tab 33 can be ensured, the current-carrying capacity of the tab 33 can be improved, and the current transfer capability between the tab 33 and the pole 5 can be improved, thereby improving the performance of the cell 3.

In addition, by defining the included angle between the groove sidewall 531 in contact with the tab and the axis of the pole 5 as an acute angle, the tab 33 and the groove sidewall 531 can be better attached, thereby reducing the resistance at the attachment between the tab 33 and the pole 5. This can not only improve the current transfer capability between the tab 33 and the pole 5, but also control the temperature rise and improve the performance of the cell 3.

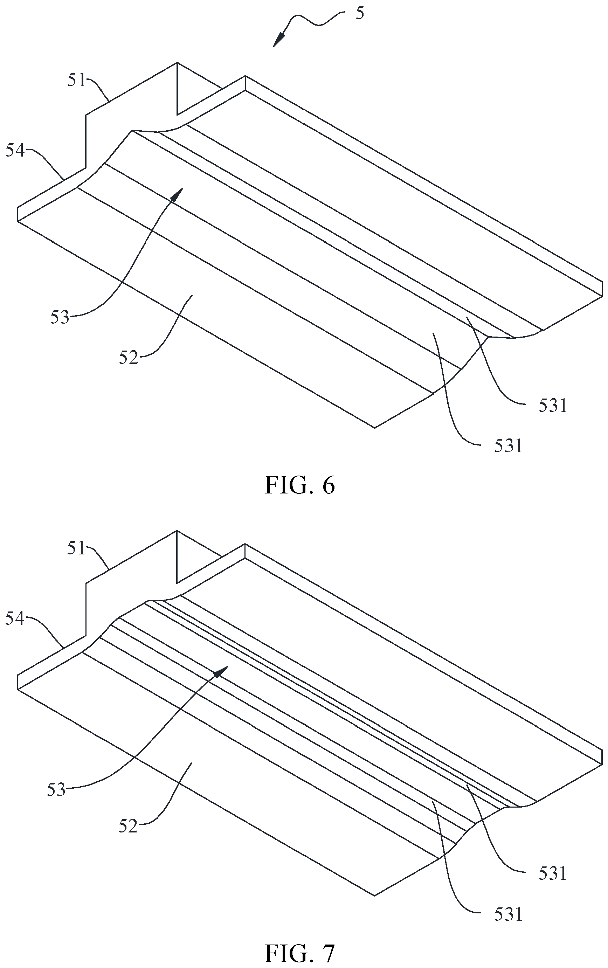

Referring to FIG. 5 or FIG. 6, FIG. 5 is a second schematic view of a structure of a pole 5 according to some embodiments of the present disclosure, and FIG. 6 is a third schematic view of a structure of a pole 5 according to some embodiments of the present disclosure. In some embodiments, along a direction perpendicular to the axis of the pole 5, the tab welding groove 53 runs through an end or two ends of the body 51.

In some embodiments, an end of the tab welding groove 53 may run through an end of the body 51, as shown in FIG. 5. In some other embodiments, two ends of the tab welding groove 53 may run through two ends of the body 51, as shown in FIG. 6.

It can be understood that when the tab welding groove 53 runs through both ends of the body 51 in the direction perpendicular to the axis of the pole 5, the length dimension L1 of the tab welding groove 53 in the extension direction of the tab welding groove 53 is equal to the length dimension L3 of the body 51 in the extension direction of the tab welding groove 53.

In these embodiments, by penetrating the tab welding groove 53 through one or both ends of the body 51, on the one hand, the dimension of the tab welding groove 53 can be increased, so that the width of the tab 33 fitted in the tab welding groove 53 can be designed to be larger, so as to improve the current transfer capability between the tab 33 and the pole 5. On the other hand, the convenience for processing the tab welding groove 53 and the easy operability for welding the tab welding groove 53 and the tab 33 can be improved through the port where the tab welding groove 53 is in communication with the outside. In this way, the efficiencies for processing the pole 5 and welding the pole 5 and the tab 33 can be improved.

Referring to FIG. 1, FIG. 5, or FIG. 6, in some embodiments, in any two cross-sections perpendicular to the extension direction of the tab welding groove 53, shapes and sizes of the cross-sections of the tab welding groove 53 are the same. In this way, the shape of the tab welding groove 53 is regular, which is conducive to reducing the processing difficulty and improving the forming efficiency of the pole 5.

Referring to FIG. 2, in some embodiments, two groove sidewalls 531 are provided. The two groove sidewalls 531 are symmetrically distributed along the axis of the pole 5. In this way, not only the structure of the pole 5 is symmetrical, the stress state of the pole 5 can be improved, but also the difficulty of connecting the tab 33 to the pole 5 can be reduced, so that when the tab 33 is welded to the pole 5, the tab cluster can be welded to the adjacent groove sidewall 531.

In addition, in some embodiments, the pole 5 is welded to two tab clusters, the two tab clusters are symmetrically distributed along the axis of the pole 5, and the two tab clusters may be welded to the two groove sidewalls 531, respectively. In this way, a plurality of welding surfaces are arranged between the tab 33 and the pole 5, thereby enhancing the stability of the connection between the pole 5 and the tab cluster.

Referring to FIG. 2, in some embodiments, sides of the two groove sidewalls 531 away from the groove opening of the tab welding groove 53 are connected to each other. In this way, the tab welding groove 53 is a V-shaped groove. In this way, not only the tab welding groove 53 has a simple structure and is easy to process, but also the pole 5 can have a relatively large size at the position where the tab welding groove 53 is provided, so as to improve the structural strength of the pole 5.

Referring to FIG. 2, in some embodiments, a first chamfer R1 is provided at a junction of the groove sidewall 531 and the first surface 52. The first chamfer R1 is a rounded chamfer with a radius range of 15 mm to 30 mm.

It can be understood that the radius range of the first chamfer R1 includes, but is not limited to, 15 mm, 17 mm, 18 mm, 19 mm, 20 mm, 21 mm, 22 mm, 25 mm, 26 mm, 28 mm, 29 mm, and 30 mm.

In these embodiments, by providing the first chamfer R1, on the one hand, the scratching of the tab 33 by the inflection point at the junction between the groove sidewall 531 and the first surface 52 can be improved, thereby improving the stress state of the tab 33 and preventing the tab 33 from being scratched. On the other hand, the stress of the pole 5 at the junction can be improved, and the reliability of the pole 5 can be improved.

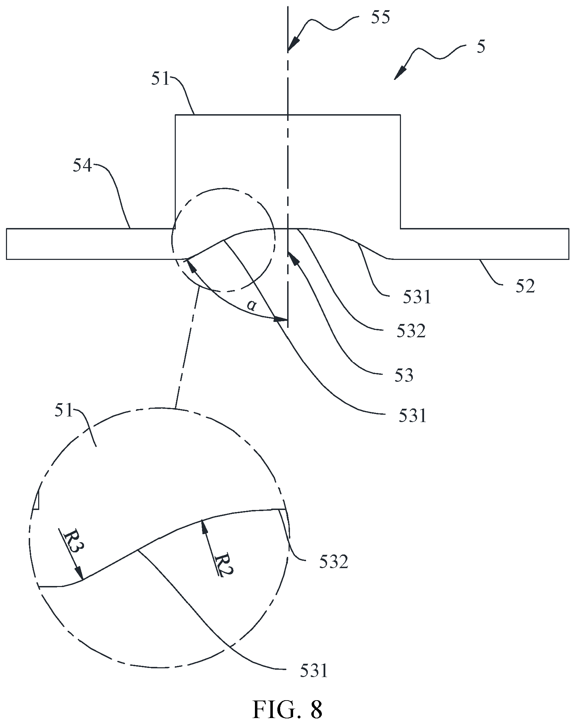

Referring to FIG. 7 and FIG. 8, FIG. 7 is a fourth schematic view of a structure of a pole 5 according to some embodiments of the present disclosure, and FIG. 8 is a side view of the pole 5 shown in FIG. 7 according to some embodiments of the present disclosure. in some embodiments, the tab welding groove 53 further has a groove bottom wall 532. A side of the two groove sidewalls 531 away from the groove opening of the tab welding groove 53 is connected to the groove bottom wall 532. Specifically, the two groove sidewalls 531 are respectively connected to two side edges of the groove bottom wall 532. In this way, the tab welding groove 53 is a trapezoidal groove having an opening width dimension greater than a bottom width dimension. Optionally, the tab welding groove 53 is an isosceles trapezoidal groove.

In these embodiments, through the above arrangement, on the one hand, two groove sidewalls 531 can be defined by the pole 5 to facilitate the connection between the pole 5 and the tab 33, and on the other hand, the depth dimension of the tab welding groove 53 can be controlled, thereby ensuring the overall strength of the pole 5.

Referring to FIG. 8, in some embodiments, a second chamfer R2 is provided at a junction of the groove sidewall 531 and the groove bottom wall 532. The second chamfer R2 is a rounded chamfer with a radius range of 5 mm to 15 mm.

It can be understood that the radius range of the second chamfer R2 includes, but is not limited to, 5 mm, 7 mm, 8 mm, 9 mm, 10 mm, 11 mm, 12 mm, and 15 mm.

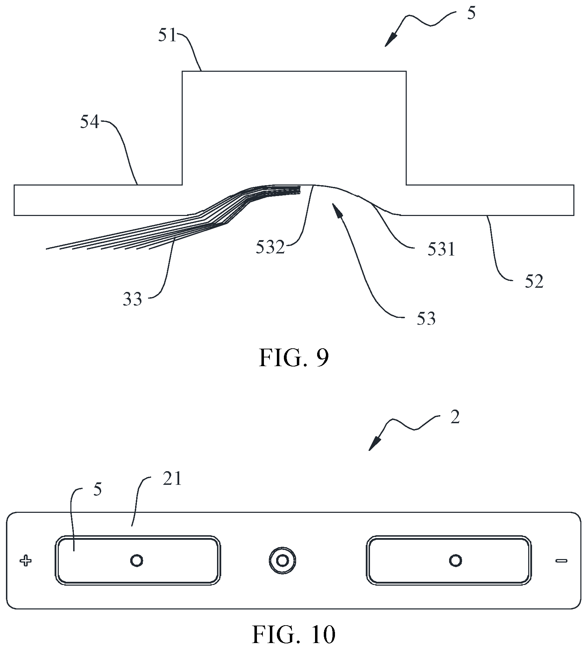

As shown in FIG. 9, FIG. 9 is a schematic view of cooperation between a pole 5 and a tab 33 shown in FIG. 7 according to some embodiments of the present disclosure, the tab cluster is inserted into the tab welding groove 53 along the groove sidewall 531, and extends to the groove bottom wall 532 along the second chamfer R2.

In these embodiments, by providing the second chamfer R2, on the one hand, when the tab 33 extends from the groove sidewall 531 to the groove bottom wall 532, the tab 33 can be smoothly bent at the position between the groove sidewall 531 and the groove bottom wall 532, thereby improving the stress state of the tab 33 and preventing the tab 33 from being damaged due to excessively sharp bending. On the other hand, the stress of the pole 5 at the junction can be improved, and the reliability of the pole 5 can be improved.

In addition, a chamfer is mainly disposed at a corner that is of the pole 5 and that is in contact with the tab 33. In this way, the tab 33 can be bent smoothly to improve the stress concentration of the tab 33 at the bending position, and the processing cost of the chamfer can also be controlled, thereby controlling the manufacturing cost of the pole 5.

Referring to FIG. 8, in some embodiments, a third chamfer R3 is provided at a junction of the groove sidewall 531 and the first surface 52. The third chamfer R3 is a rounded chamfer with a radius range of 10 mm to 20 mm.

It can be understood that the radius range of the third chamfer R3 includes, but is not limited to, 10 mm, 11.5 mm, 12 mm, 13 mm, 14 mm, 15 mm, 17 mm, 18 mm, 19 mm, and 20 mm.

In these embodiments, by providing the third chamfer R3, on the one hand, the scratching of the tab 33 by the inflection point at the junction between the groove sidewall 531 and the first surface 52 can be improved, thereby improving the stress state of the tab 33 and preventing the tab 33 from being scratched. On the other hand, the stress of the pole 5 at the junction can be improved, and the reliability of the pole 5 can be improved.
in some embodiments, the included angle between the plane where the groove sidewall 531 is located and the axis of the pole 5 is α, and α satisfies: 30° ≤ α ≤ 65°.

Exemplarily, the included angle α includes, but is not limited to, 30°, 32°, 33°, 34°, 35°, 36°, 38°, 40°, 42°, 44°, 45°, 47°, 48°, 50°, 52°, 55°, 56°, 58°, 59°, 60°, 62°, 64°, and 65°.

In these embodiments, by defining the included angle α, on the one hand, it can prevent the tab 33 from having a large bending angle to fit the groove sidewall 531 due to the excessively small angle, thereby improving the stress state at the bending position of the tab 33, and further effectively avoiding cracks or even fractures of the tab 33 at the bending position. On the other hand, it can prevent the angle from being too large, which would result in a small overlapping height between the tab 33 and the pole 5. Thus, the overlapping height between the tab 33 and the pole 5 is ensured, so as to reduce the height dimension occupied by the tab 33.

Referring to FIG. 7, in some embodiments, an outer peripheral surface of the body 51 is provided with an extension portion 54. The extension portion 54 is disposed on a side close to the first surface 52. The extension portion 54 is located on a side of the groove sidewall 531.

It can be understood that the extension portion 54 and the body 51 are integrally formed.

In these embodiments, by providing the extension portion 54, on the one hand, it is beneficial for the tab 33 to form a stopper fit with the end cover of the cell 3 through the extension portion 54, which can prevent the pole 5 from detaching from the end cover. On the other hand, the groove opening of the tab welding groove 53 may extend toward the extension portion 54. In this way, while increasing the size of the groove opening, the strength of the pole 5 at the groove opening can be ensured, preventing the part of the pole 5 located in the groove opening from deforming.

In addition, by providing the extension portion 54, when the tab 33 is welded to the pole 5, the tab 33 can be supported by the extension portion 54 to prevent the tab 33 from being deformed during welding, thereby improving the reliability of welding between the tab 33 and the pole 5.

Referring to FIG. 7, in some embodiments, two groove sidewalls 531 are provided. The two groove sidewalls 531 are symmetrically distributed along the axis of the pole 5. Two extension portions 54 are provided. The two extension portions 54 are in one-to-one correspondence with the two groove sidewalls 531. In this way, the structure of the pole 5 is symmetrical, and the stress state of the pole 5 can be improved.

Referring to FIG. 10, FIG. 10 is a schematic view of a structure of a cover assembly 2 according to some embodiments of the present disclosure. Correspondingly, some embodiments of the present disclosure further provide a cover assembly 2, and the cover assembly 2 includes a cover plate 21 and the pole 5 disclosed in some embodiments of the present disclosure. The pole 5 passes through the cover plate 21.

It can be understood that the cover assembly 2 further includes a pressing ring, upper plastic, lower plastic, and a sealing ring. The pressing ring is located on a side of the cover plate 21 and is sleeved on an end of the pole 5 away from the tab welding groove 53. The upper plastic is sleeved on the pole 5 and located between the pressing ring and the cover plate 21. The lower plastic is disposed on the other side of the cover plate 21. The sealing ring is sleeved on the pole 5 and abuts against the cover plate 21 to seal the fitting part between the cover plate 21 and the pole 5.

In these embodiments, by using the pole 5 disclosed in some embodiments of the present disclosure, the bending angle of the tab 33 in contact with the groove sidewall 531 can be reduced, so as to avoid obvious stress concentration of the tab 33 at the bending position, thereby effectively avoiding cracks or even fractures of the tab 33 at the bending position. In this way, the structural integrity of the tab 33 can be ensured, the current-carrying capacity of the tab 33 can be improved, and the current transfer capability between the tab 33 and the pole 5 can be improved, thereby improving the performance of the cell 3.

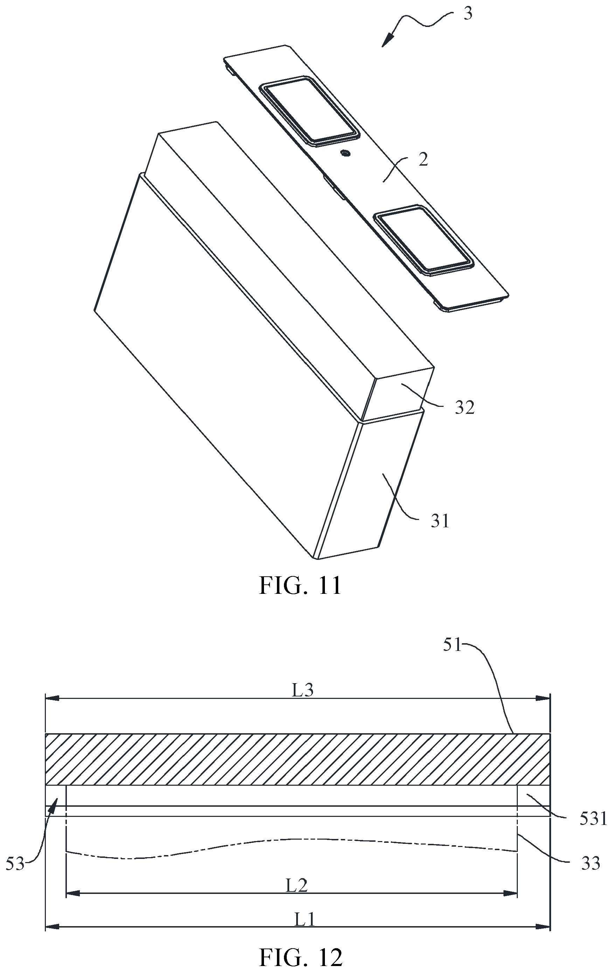

Referring to FIG. 11, FIG. 11 is a schematic view of a structure of a cell 3 according to some embodiments of the present disclosure. Correspondingly, some embodiments of the present disclosure further provide a cell 3. The cell 3 includes a housing 31, an electrode assembly 32, a tab 33, and a cover assembly 2 disclosed in some embodiments of the present disclosure. The housing 31 has an accommodation cavity, and an end of the housing 31 is the open end 11. The cover plate 21 covers the open end 11 of the housing 31 to close the accommodation cavity. The electrode assembly 32 is disposed in the accommodation cavity. An end of the tab 33 is connected to the electrode assembly 32, and the other end of the tab 33 extends into the tab welding groove 53. The tab 33 is attached to the groove sidewall 531. The tab 33 is fixedly connected to the inner wall of the tab welding groove 53.

In these embodiments, by using the pole 5 disclosed in some embodiments of the present disclosure, the bending angle of the tab 33 in contact with the groove sidewall 531 can be reduced, so as to avoid obvious stress concentration of the tab 33 at the bending position, thereby effectively avoiding cracks or even fractures of the tab 33 at the bending position. In this way, the structural integrity of the tab 33 can be ensured, the current-carrying capacity of the tab 33 can be improved, and the current transfer capability between the tab 33 and the pole 5 can be improved, thereby improving the performance of the cell 3.

Referring to FIG. 12, FIG. 12 is a schematic view of cooperation between the pole 5 and the tab 33 in another cross-sectional direction according to some embodiments of the present disclosure. in some embodiments, along the direction perpendicular to the axis of the pole 5, the length dimension of the tab welding groove 53 is defined as L1. The length dimension of the tab 33 is defined as L2. L1 and L2 satisfy: L1 > L2. In this way, the smoothness of mounting the tab 33 into the tab welding groove 53 can be improved, so as to improve the efficiency of connection between the tab 33 and the pole 5.

When the tab 33 is a rectangular tab, the length dimension L2 of the tab 33 is the length dimension L2 at any height position of the tab 33. When the tab 33 is a trapezoidal tab and the long bottom of the tab 33 is connected to the electrode sheet, the length dimension L2 of the tab 33 is half of the sum of the length of an end of the tab 33 connected to the electrode sheet and the length of an end of the tab 33 away from the electrode sheet.

The technical solutions and technical effects of the present disclosure are described in detail below through specific embodiments, and the following embodiments are some embodiments of the present disclosure and do not specifically limit the present disclosure.

These embodiments aim to investigate the influence of the pole 5 applied to the cell 3 on the cell performance.

The test content of the embodiments is specifically described as follows.

### I. Related Description for Test

The test objects are three types of cells 3 with an energy density of 280 Ah. The differences between the three types of cells 3 are that the included angle α of the first cell 3 is 0, that is, the groove sidewall 531 is parallel to the axis of the pole 5, the included angle α of the second cell 3 is 30°, and the included angle α of the third cell 3 is 60°.

The fitting degree refers to a percentage of the area where the tab 33 is attached to the pole 5 relative to the area of the tab 33 facing the groove sidewall 531.

The current transfer capability represents a current transfer capability between the pole 5 and the tab 33.

The position of the test temperature is the temperature at the negative tab.

The ambient temperature under test was 25±1°C.

### II. Test Results

The above three types of cells 3 were tested to obtain test data as follows.

**Tabe 1. Test Data Table**

| α | Fitting Degree | Current Transfer Capability | Temperature Rise |
|---|---|---|---|
| 0 | 70.43% | 80 A | 15.4 °C |
| 30° | 85.57% | 91 A | 10.2 °C |
| 60° | 95.69% | 95 A | 5.5 °C |

It can be seen from Table 1 that:
(1) Fitting Degree: As the included angle α increases from 0° to 30° and from 0° to 60°, the fitting degree increases from 70.43% to 85.58% and from 70.43% to 95.69%, respectively. It can be seen that the larger the included angle α, the better the fitting degree between the tab 33 and the pole 5, and the larger the area where the tab 33 is attached to the pole 5. Correspondingly, the current transfer capability is better.
(2) Current Transfer Capability: As the angle α increases from 0° to 30° and from 0° to 60°, the current transfer capability increases from 80 A to 91 A and from 80 A to 95 A, respectively. It can be seen that the larger the included angle α, the better the current transfer capability between the tab 33 and the pole 5.
(3) Temperature Rise: As the included angle increases from 0° to 30° and from 0° to 60°, the temperature rise decreases from 15.4 °C to 10.2 °C. and from 15.4 °C to 5.5 °C, respectively. It can be seen that the larger the included angle α, the smaller the temperature rise.

Therefore, by defining the included angle α between the groove sidewall 531 and the axis of the pole 5, the tab 33 cluster not only has a small bending angle to effectively prevent the tab 33 from breaking, but also can better contact with the groove sidewall 531, so that the tab 33 and the pole 5 are more closely attached, thereby increasing the contact area between the tab 33 and the pole 5. In this way, the resistance when the current passes through can be reduced, the current transfer capability between the pole 5 and the tab 33 can be improved, and the current can be transmitted more smoothly. In addition, due to the reduction of the resistance, the heat generated at the current transfer position between the tab 33 and the pole 5 will also be correspondingly reduced, which helps to reduce the temperature rise. In this way, the performance of the cell 3 can be improved.

On the basis of the above embodiments, the embodiments of the present disclosure further describe the cell 3 as follows.

### Embodiment 1

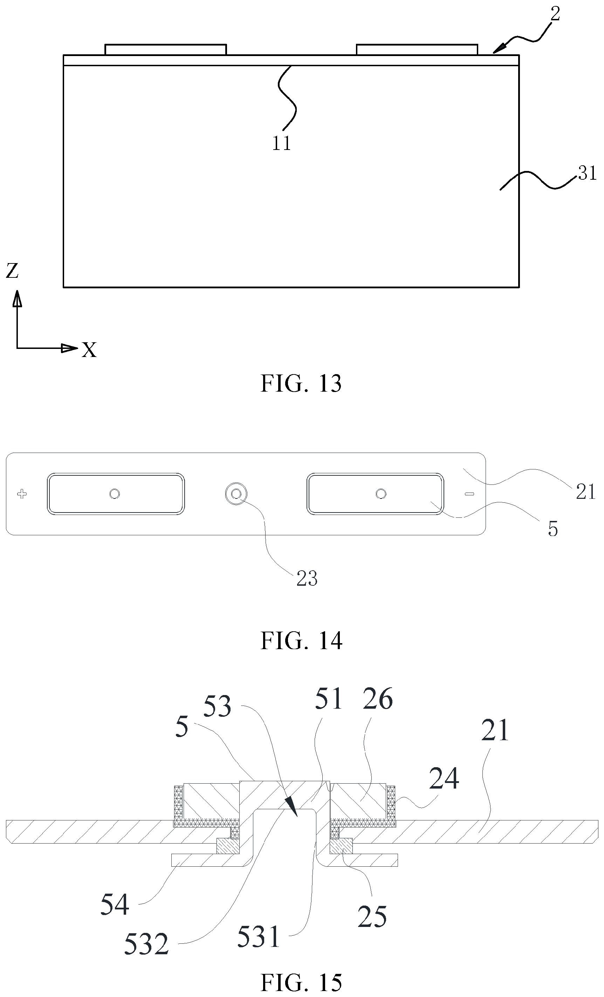

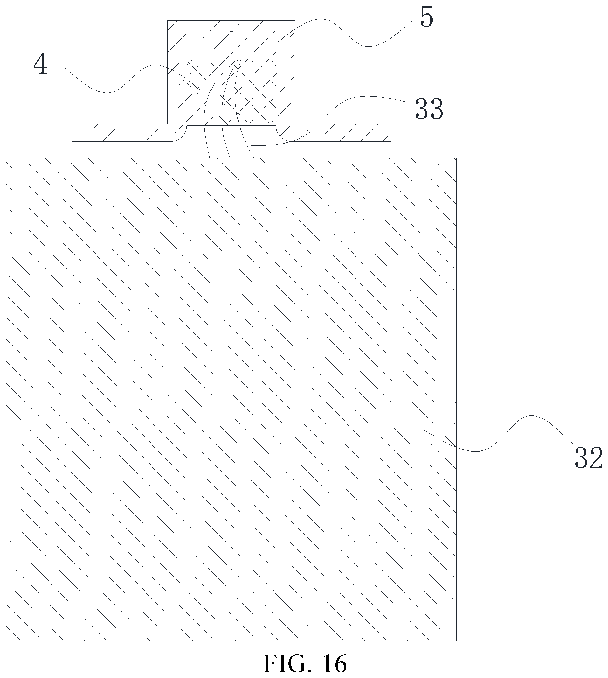

In an embodiment of the present disclosure, as shown in FIG. 13 to FIG. 16, a cell 3 provided in the present disclosure includes a housing 31, a cover assembly 2, and an electrode assembly 32. A shape of the housing 31 matches a shape of the entire cell 3. In the embodiment, the cell 3 is a square cell 3, the length direction of the cell 3 is denoted as the X direction shown in the figure, the thickness direction of the cell 3 is denoted as the Y direction shown in the figure, and the height direction of the cell 3 is denoted as the Z direction shown in the figure. Correspondingly, the housing 31 is of a hollow cuboid structure. The housing 31 is internally provided with an accommodation cavity for accommodating the electrode assembly 32 and the electrolyte. An end of the housing 31 in the height direction defines an opening for providing communication between the accommodation cavity and the outside of the cell 3, that is, an end of the housing 31 in the height direction defines an open end 11. The cover assembly 2 covers the open end 11 of the housing 31, and the cover assembly 2 is configured to block the open end 11, so that the accommodation cavity inside the cell 3 is in an enclosed state. An enclosed accommodation cavity is defined between the cover assembly 2 and the housing 31. The electrode assembly 32 is mounted in the accommodation cavity, and the electrode assembly 32 is electrochemically converted to realize electric energy storage. The electrode assembly 32 includes a current collector assembly stacked or wound together and a tab 33 formed on the current collector assembly. The tab 33 is used for current conduction. The cover assembly 2 includes a pole 5. The pole 5 functions to conduct current, an end of the pole 5 is configured to be electrically connected to the electrode assembly 32, and the other end of the pole 5 is configured to be electrically connected to an external power device. An end of the pole 5 faces the outside of the cell 3, and the other end of the pole 5 faces the inside of the cell 3. An end of the pole 5 facing the accommodation cavity inside the cell 3 is provided with a tab connection groove 53. The tab connection groove 53 has an inner wall. The groove opening of the tab connection groove 53 faces the electrode assembly 32. An end of the tab 33 away from the electrode assembly 32 is a free end, and the free end of the tab 33 is connected and fixed to an inner wall of the tab connection groove 53.

It can be understood that by directly connecting the tab 33 to the pole 5, the electrical connection between the electrode assembly 32 and the pole 5 is realized by eliminating the use of the adapter plate, which is conducive to simplifying the structure and improving the space utilization inside the cell 3. The tab 33 and the pole 5 are connected and fixed by laser welding. Because the tab 33 is directly welded to the pole 5, only one welding process needs to be completed when the cell 3 is assembled. Compared with the connection method (an end of the adapter plate is welded and fixed to the pole 5, and the other end of the adapter plate is welded and fixed to the tab 33) using the adapter plate in the related art , the embodiment of the present disclosure eliminates the use of the adapter plate, which is beneficial to reducing the welding process and improving the assembly efficiency. In addition, the cell 3 provided in the embodiment can further reduce resistance of the entire cell 3.

Specifically, the cover assembly 2 includes a cover plate 21, a pole 5, an insulating member 24, a sealing member 25, and a platen 26. The cover plate 21 is a rectangular plate, and the cover plate 21 covers the open end 11 of the housing 31. The cover plate 21 and the housing 31 are fixed by welding. Two poles 5 are provided, the two poles 5 are respectively a positive pole and a negative pole, and the positive pole and the negative pole are spaced apart along the length direction of the cover plate 21 (that is, the X direction shown in FIG. 13). Each of the poles 5 is correspondingly provided with an insulating member 24, a sealing member 25 and a platen 26. The insulating member 24 is made of an insulating material and plays a role of insulation. The sealing member 25 is made of an insulating material with certain elasticity and plays a role of insulation and sealing. The pole 5 passes through the cover plate 21. The insulating member 24 and the sealing member 25 are sandwiched between the pole 5 and the cover plate 21. The pole 5 includes a body 51 and an extension portion 54. The body 51 is of a cuboid structure, and the body 51 passes through the cover plate 21. The tab connection groove 53 is provided on a side of the body 51 facing the accommodation cavity. Correspondingly, a cross section of the tab connection groove 53 has a polygonal structure with a large opening, so that the tab connection groove 53 has sufficient space in a length direction (that is, the X direction shown in FIG. 13) to adapt to a size of the tab 33. Certainly, in other embodiments, the shape of the tab connection groove 53 may be adaptively changed according to the shape and size of the tab 33. The extension portion 54 is located on a side of the cover plate 21 close to the inside of the cell 3, the extension portion 54 is annular, and the extension portion 54 is disposed on an end of the body 51 facing the accommodation cavity. An end of an inner ring of the extension portion 54 is connected to the body 51, and an end of an outer ring of the extension portion 54 extends in a direction away from the body 51.

In the embodiment, the extension portion 54 and the body 51 are integrally formed, and the extension portion 54 is parallel to the cover plate 21. The platen 26 is arranged on an end of the body 51 facing the outside of the cell 3, the platen 26 is annular, an end of an inner ring of the platen 26 is welded and fixed to the body 51, and an end of an outer ring of the platen 26 extends in a direction away from the body 51. Alternatively, the platen 26 is fixed to the platen 26 by riveting. Under the action of the platen 26 and the extension portion 54, the pole 5 is mounted and fixed. It may also be understood that the cover plate 21 is clamped between the platen 26 and the extension portion 54. In order to realize insulation and sealing between the pole 5 and the cover plate 21, the sealing member 25 is sleeved at the junction between the body 51 and the extension portion 54, so that the body 51 and the cover plate 21 and the extension portion 54 and the cover plate 21 can be both separated by the sealing member 25. The insulating member 24 is located on a side of the sealing member 25 away from the accommodation cavity, and the body 51 and the cover plate 21 and the platen 26 and the cover plate 21 are both separated by the insulating member 24.

Specifically, the length direction of the tab connection groove 53(that is, the X direction shown in FIG. 13) is parallel to the length direction of the cover assembly 2, so that the length direction of the tab connection groove 53 is parallel to the length direction of the tab 33, to avoid twisting the tab 33 when the tab 33 is mounted. It should be noted that the length direction of the tab connection groove 53 is arranged to be parallel to the length direction of the cover assembly 2, so that the shape of the tab connection groove 53 is matched with the spatial position of the tab 33. After the electrode assembly 32 is mounted in the accommodation cavity, the length direction of the tab 33 is exactly parallel to the length direction of the cover assembly 2. In this way, the length direction of the tab 33 (that is, the X direction shown in FIG. 3) can be parallel to the length direction of the tab connection groove 53. In addition, when the tab 33 is mounted, the tab 33 can be directly folded along the thickness direction of the tab 33, so that the tab 33 abuts against the side wall of the tab connection groove 53, which can prevent the tab 33 from twisting along its length direction. Therefore, in other embodiments, the length direction of the tab connection groove 53 should match the length direction of the tab 33 to facilitate installation. The length dimension of the tab connection groove 53 is L1, and the length dimension of the free end of the tab 33 is L2. When the shape of the free end of the tab 33 is irregular, the length dimension L2 is the maximum dimension in the length direction. In the embodiment, the length dimension L1 of the tab connection groove 53 is greater than the length dimension L2 of the free end of the tab 33, so as to facilitate the installation operation of the tab 33 and ensure the connection strength between the tab 33 and the pole 5.

In some embodiments, the length dimension of the current collector assembly in the electrode assembly 32 ranges from 100 mm to 1000 mm. Taking 100 mm, 200 mm, 300 mm, 400 mm, and 500 mm as an example, the length dimension L2 of the tab 33 is correspondingly arranged to be in a range of 10-20 mm, 20-40 mm, 40-60 mm, 60-80 mm, and 80-100 mm, respectively. In the embodiment, by arranging the length dimension L2 of the free end of the tab 33 within the range of 10%-20% of the length dimension of the current collector assembly, the current transfer capability of the tab 33 can be effectively increased, so that the current transfer capability at the tab 33 meets the use of a high-current working condition, and the heat dissipation performance and safety of the cell 3 can be improved. In practical applications, the ratio of the length dimension of the tab 33 to the length dimension of the current collector assembly is controlled in the range of 14%-15% to obtain the best current-carrying capacity and heat dissipation performance.

In some embodiments, the length dimension L1 of the tab connection groove 53 is greater than the length dimension L2 of the tab 33, and the difference between L1 and L2 ranges from 1 mm to 10 mm. Optionally, the difference between the length dimension L1 of the tab connection groove 53 and the length dimension L2 of the tab 33 ranges from 2 mm to 6 mm. This structure helps ensure an effective welding area of the tab 33 and avoid a waste of space of the tab connection groove 53. In practical applications, taking a cell 3A of a certain model as an example, the length dimension of the current collector assembly is 275.8 mm, the length dimension L2 of the free end of the tab 33 is 39.43 mm, and the length dimension L1 of the tab connection groove 53 is 45 mm. Taking a cell 3B of a certain model as an example, the length dimension of the current collector assembly is 398.7 mm, the length dimension L2 of the free end of the tab 33 is 59 mm, and the length dimension L1 of the tab connection groove 53 is 63 mm.

Specifically, the cover plate 21 defines a liquid injection hole 23, and the electrolyte is injected into the accommodation cavity through the liquid injection hole 23.

Specifically, the inner wall of the tab connection groove 53 includes a groove bottom wall 532 and a groove sidewall 531. The groove bottom wall 532 is located at the bottom of the tab connection groove 53, that is, the groove bottom of the tab connection groove 53 forms a groove bottom wall 532. The groove sidewall 531 surrounds the periphery of the groove bottom wall 532, and the groove sidewall 531 is located between the groove bottom wall 532 and the groove opening of the tab connection groove 53, that is, the groove wall of the tab connection groove 53 forms the groove sidewall 531. The free end of the tab 33 may be welded and fixed to the groove bottom wall 532 or may be welded and fixed to the groove sidewall 531. A plurality of tabs 33 are provided, or a part of the tabs 33 may be welded to the groove bottom wall 532, and another part of the tabs 33 may be welded to the groove sidewall 531.

In the embodiment, the tab 33 is welded to the groove bottom wall 532. The groove sidewall 531 is parallel to the depth direction (that is, the Z direction shown in FIG. 13) of the tab connection groove 53, and the groove bottom wall 532 may be perpendicular to the groove sidewall 531, or an obtuse angle may be formed between the groove bottom wall 532 and the groove sidewall 531. The tab 33 is welded and fixed to the groove bottom wall 532 by laser welding, and a welding mark region is formed at a junction between the tab 33 and the groove bottom wall 532 of the pole 5. The tab connection groove 53 is filled with a protective layer 4 having adhesiveness. The protective layer 4 may be a hot-melt adhesive polymer, a photocurable polymer, a pressure-sensitive adhesive polymer, or the like. The tab connection groove 53 is filled with a protective layer 4, which is also referred to as glue injection. By injecting glue, the protective layer 4 can cover the welding mark region to prevent welding slag formed during welding from falling onto the electrode assembly 32 to cause short circuit. In addition, through glue injection, the protective layer 4 also plays a role of bonding and fixing the tab 33, so as to improve the connection stability between the tab 33 and the pole 5. In order to improve the fixing effect of the protective layer 4 on the tab 33, the protective layer 4 fills the entire tab connection groove 53, so that an end of the tab 33 away from the current collector assembly is embedded in the protective layer 4.

### Embodiment 2

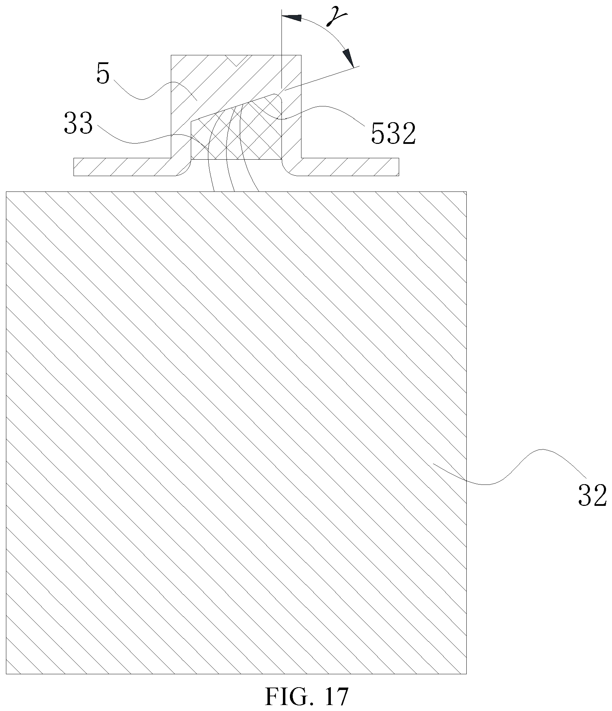

In an embodiment of the present disclosure, as shown in FIG. 17, some reference numerals refer to FIG. 15, and a structure of a cell 3 provided in this embodiment of the present disclosure is similar to that in Embodiment 1, except that the included angle between the groove bottom wall 532 and the depth direction of the tab connection groove 53 is γ, and γ satisfies: 55° ≤ γ ≤ 75°. Specifically, γ may be 55°, 60°, 65°, 70°, or 75°, but is not limited thereto. It can be understood that the tab 33 of the electrode assembly 32 extends along the height direction of the cell 3 before being connected to the pole 5, that is, the extension direction of the tab 33 is parallel to the depth direction of the tab connection groove 53. By controlling the included angle between the groove bottom wall 532 and the depth direction of the tab connection groove 53 to be in a range of 55° to 75°, the groove bottom wall 532 can be inclined toward the extension direction of the tab 33. This structure is beneficial to reduce the bending angle of the free end of the tab 33 when the tab 33 is installed and prevent some tabs 33 from being damaged due to excessive bending angle during installation.

### Embodiment 3

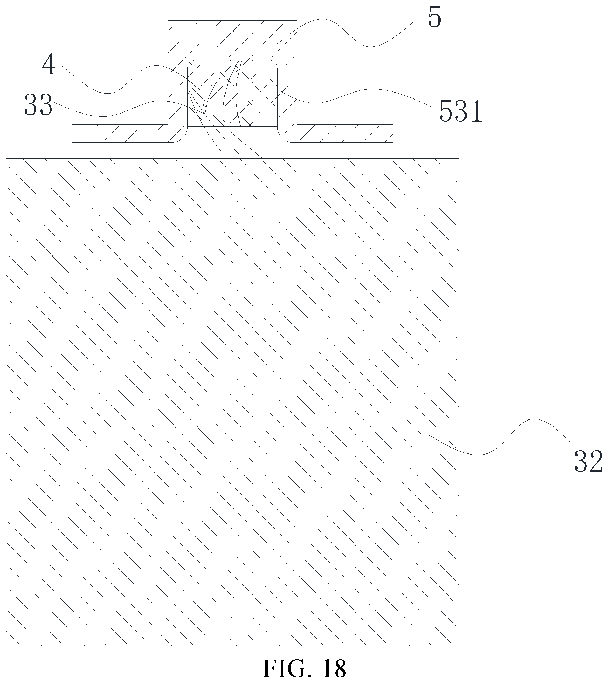

In an embodiment of the present disclosure, as shown in FIG. 18, some reference numerals refer to FIG. 15, and a structure of a cell 3 provided in in this embodiment of the present disclosure is similar to that in Embodiment 1, except that the tab 33 is welded and fixed to the groove sidewall 531. It can be understood that the tab 33 of the electrode assembly 32 extends along the height direction of the cell 3, that is, the extension direction of the tab 33 is parallel to the depth direction of the tab connection groove 53. The groove sidewall 531 is parallel to the tab 33, so that when the tab 33 is installed, the bending angle of the tab 33 can be reduced, and the tab 33 can be prevented from being damaged due to an excessively large bending amount during installation.

### Embodiment 4

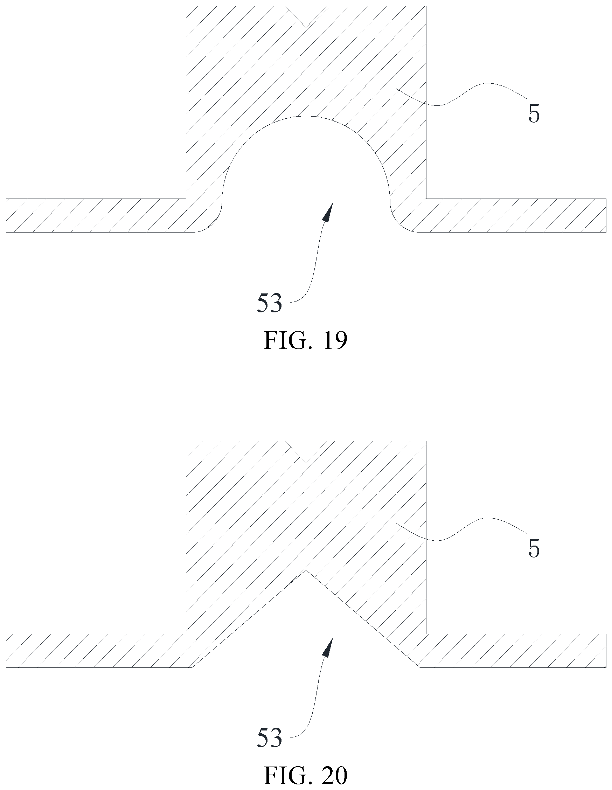

In an embodiment of the present disclosure, as shown in FIG. 19, some reference numerals refer to FIGS. 15, and a structure of a cell 3 provided in in this embodiment of the present disclosure is similar to that in Embodiment 1, except that a part of the tab connection groove 53 away from the groove opening is an arc surface structure. It can be understood that the tab 33 of the electrode assembly 32 extends along the height direction of the cell 3 before being connected to the pole 5, that is, the extension direction of the tab 33 is parallel to the depth direction of the tab connection groove 53. When the tab 33 is connected to the inner wall of the tab connection groove 53, the tab 33 needs to be bent, so that the end of the tab 33 is attached to the inner wall of the tab connection groove 53. By providing the inner wall of the tab connection groove 53 as an arc surface structure, the arc surface structure can better fit the bending shape of the tab 33 and avoid damage of the tab 33 due to excessive bending angle during installation.

### Embodiment 5

In an embodiment of the present disclosure, as shown in FIG. 20, some reference numerals refer to FIG. 15, and a structure of a cell 3 provided in in this embodiment of the present disclosure is similar to that in Embodiment 1, except that an inner wall of the tab connection groove 53 is a V-shaped structure. It can be understood that the tab 33 of the electrode assembly 32 extends along the height direction of the cell 3 before being connected to the pole 5, that is, the extension direction of the tab 33 is parallel to the depth direction of the tab connection groove 53. When the tab 33 is mounted, the tab 33 needs to be bent, so that the free end of the tab 33 is attached to the inner wall of the tab connection groove 53. By arranging the inner wall of the tab connection groove 53 as a V-shaped structure, the tab 33 can be divided into two parts and respectively mounted on the side walls on both sides of the tab connection groove 53, and the tab 33 can be prevented from generating a large bending angle.

### Embodiment 6

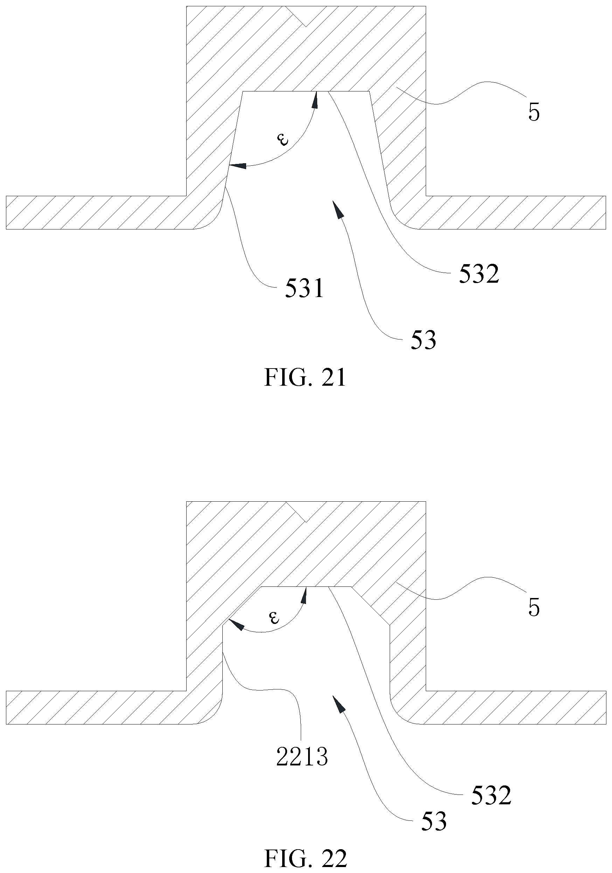

In an embodiment of the present disclosure, as shown in FIG. 21, some reference numerals refer to FIG. 15, and a structure of a cell 3 provided in this embodiment of the present disclosure is similar to that in Embodiment 1, except that a cross-section of the tab connection groove 53 is trapezoidal. The groove bottom of the tab connection groove 53 forms a groove bottom wall 532, and the groove wall of the tab connection groove 53 forms a groove sidewall 531. The included angle between the groove sidewall 531 and the groove bottom wall 532 is ε, and ε is greater than 90°. The free end of the tab 33 may be mounted on the groove bottom wall 532, or mounted on the groove sidewall 531, or the tab 33 is mounted on both the groove bottom wall 532 and the groove sidewall 531.

### Embodiment 7

In an embodiment of the present disclosure, as shown in FIG. 22, some reference numerals refer to FIG. 15, and a structure of a cell 3 provided in this embodiment of the present disclosure is similar to that in Embodiment 1, except that a cross-section of the tab connection groove 53 is a polygonal structure. The groove bottom of the tab connection groove 53 forms a groove bottom wall 532. The groove wall of the tab connection groove 53 sequentially forms a groove sidewall 531 and a third welding surface 2213 in a direction from a groove bottom to a groove opening. The included angle between the groove sidewall 531 and the groove bottom wall 532 is ε, and ε is greater than 90°. The free end of the tab 33 may be mounted on at least one of the groove bottom wall 532, the groove sidewall 531, and the third welding surface 2213.

## Claims

1. A pole (5), comprising:
a body (51) comprising a first surface (52), the first surface (52) defining a tab welding groove (53);
**characterized in that** the tab welding groove (53) comprises at least one groove sidewall (531), the groove sidewall (531) is configured to be in contact with the tab (33), and a plane where the groove sidewall (531) is located is gradually inclined toward an axis (55) of the pole in a direction away from the first surface (52).

2. The pole (5) as claimed in claim 1, wherein the tab welding groove (53) runs through an end or both ends of the body (51) in a direction perpendicular to the axis (55) of the pole.

3. The pole (5) as claimed in claim 2, wherein in any two cross-sections perpendicular to an extension direction of the tab welding groove (53), the cross-sections of the tab welding groove (53) have the same shapes and the same sizes.

4. The pole (5) as claimed in any one of claims 1 to 3, wherein two groove sidewalls (531), are provided, and the two groove sidewalls (531) are symmetrically distributed along the axis (55) of the pole.

5. The pole (5) as claimed in claim 4, wherein sides of the two groove sidewalls (531) away from a groove opening of the tab welding groove (53) are connected to each other.

6. The pole (5) as claimed in claim 5, wherein a first chamfer is provided at a junction between each of the two groove sidewalls (531) and the first surface (52), and the first chamfer is a rounded chamfer having a radius range of 15 mm to 30 mm.

7. The pole (5) as claimed in any one of claims 4 to 6, wherein the tab welding groove (53) further comprises a groove bottom wall (532), and sides of the two groove sidewalls (531) away from the groove opening of the tab welding groove (53) are both connected to the groove bottom wall (532).

8. The pole (5) as claimed in claim 7, wherein a second chamfer is provided at a junction of each of the two groove sidewalls (531) and the groove bottom wall (532), and the second chamfer is a rounded chamfer having a radius range of 5 mm to 15 mm.

9. The pole (5) as claimed in claim 7 or 8, wherein a third chamfer is provided at a junction of each of the two groove sidewalls (531) and the first surface (52), and the third chamfer is a rounded chamfer having a radius range of 10 mm to 20 mm.

10. The pole (5) as claimed in any one of claims 1 to 9, wherein an included angle between the plane where the groove sidewall (531) is located and the axis (55) of the pole is defined as α, satisfying: 30° ≤ α ≤ 65°.

11. The pole (5) as claimed in any one of claims 1 to 9, wherein an outer peripheral surface of the body (51) is provided with at least one extension portion (54), the extension portion (54) is disposed close to the first surface (52), and the extension portion (54) is located on an side of the groove sidewall (531).

12. The pole (5) as claimed in claim 11, wherein two groove sidewalls (531) are provided, the two groove sidewalls (531) are symmetrically distributed along the axis (55) of the pole, two extension portions (54) are provided, and the two extension portions (54) are in one-to-one correspondence with the two groove sidewalls (531).

13. A cover assembly (2), comprising:
a cover plate (21); and
the pole (5) as claimed in any one of claims 1 to 12, the pole (5) passing through the cover plate (21).

14. A cell (3), comprising:
a housing (31) defining an accommodation cavity, an end of the housing (31) being an open end (11);
an electrode assembly (32) disposed in the accommodation cavity;
at least one tab (33), an end of the tab (3) being connected to the electrode assembly (32); and
the cover assembly (2) as claimed in claim 13, the cover plate (21) covering the open end (11) of the housing (31) to enclose the accommodation cavity;
wherein another end of the tab (33) extends into the tab welding groove (53), and the tab (33) is attached to the groove sidewall (531) and is connected and fixed to an inner wall of the tab welding groove (53).

15. The cell (3) as claimed in claim 14, wherein in a direction perpendicular to the axis (55) of the pole, a length dimension of the tab welding groove (53) is defined as L1, and a length dimension of the tab (33) is defined as L2, satisfying: L1 > L2.

16. The cell (3) as claimed in claim 15, wherein a length direction of the tab connection groove (53) is parallel to a length direction of the cover assembly (2).

17. The cell (3) as claimed in claim 15 or 16, wherein the inner wall comprises a groove bottom wall (532) and a groove sidewall (531), the groove bottom wall (532) is located at a bottom of the tab connection groove (53), the groove sidewall (531) surrounds a periphery of the groove bottom wall (532), the groove sidewall (531) is located between the groove bottom wall (532) and a groove opening of the tab connection groove (53), and a free end of the tab (33) is welded and fixed to the groove bottom wall (532) and/or the groove sidewall (531).

18. The cell as claimed in claim 17, wherein an included angle between the groove bottom wall (532) and the axis (55) of the pole is defined as γ, satisfying: 55° ≤ γ ≤ 75°.

19. The cell (3) as claimed in claim 15, wherein a portion of the inner wall of the tab connection groove (53) away from a groove opening of the tab connection groove (53) is an arc surface structure.

20. The cell as claimed in any one of claims 14 to 19, wherein the tab connection groove (53) is filled with a protective layer (4) having an adhesive property, a welding mark region is defined at a junction between the tab (33) and the pole (5), and the protective layer (4) covers the welding mark region.

21. The cell as claimed in claim 20, wherein the tab connection groove (53) is fully filled by the protective layer (4).

22. The cell as claimed in any one of claims 14 to 21, wherein the cover assembly (2) further comprises an insulating member (24) and a sealing member (25), and the insulating member (24) and the sealing member (25) are sandwiched between the pole (5) and the cover plate (21).

23. The cell as claimed in claim 22, wherein the pole (5) further comprises an extension portion (54), the extension portion (54) is annular, an end of an inner ring of the extension portion (54) is connected to an end of the body (51) facing the accommodation cavity, and an end of an outer ring of the extension portion (54) extends in a direction away from the body (51).
